(19) Europäisches Patentamt
European Patent Office
Office européen des brevets

(11) **EP 4 571 294 A1**

(12) **EUROPEAN PATENT APPLICATION**
published in accordance with Art. 153(4) EPC

(43) Date of publication:
**18.06.2025 Bulletin 2025/25**

(21) Application number: **23852454.0**

(22) Date of filing: **02.08.2023**

(51) International Patent Classification (IPC):
*G01N 21/3504* (2014.01)

(52) Cooperative Patent Classification (CPC):
**G01N 21/3504**

(86) International application number:
**PCT/JP2023/028260**

(87) International publication number:
**WO 2024/034487 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.08.2022 JP 2022126517**

(71) Applicant: **SHIMADZU CORPORATION**
**Kyoto-shi, Kyoto 604-8511 (JP)**

(72) Inventor: **ARAYA, Katsuhiko**
**Kyoto-shi, Kyoto 604-8511 (JP)**

(74) Representative: **Müller-Boré & Partner**
**Patentanwälte PartG mbB**
**Friedenheimer Brücke 21**
**80639 München (DE)**

(54) **GAS MEASUREMENT DEVICE**

(57) The gas measurement device (1) includes a first detection unit (120) that detects a first component in a sample gas, and a second detection unit (140) that detects a second component and a third component that interfere with the first component. The first detection unit includes a first sample cell (122) and a first detector (10A) which are disposed in series on a first optical path (IR1) of light emitted from a first light source (124). The second detection unit (140) includes a second sample cell (142), a second detector (10B) and a third detector (10C) which are disposed in series on a second optical path (IR2) of light emitted from a second light source (144).

FIG.1

EP 4 571 294 A1

**Description**

TECHNICAL FIELD

The present disclosure relates to a gas measurement device that measures a sample gas including a plurality of gas components, absorption wavelength ranges of the plurality of gas components at least partially overlapping with each other.

BACKGROUND ART

As a device for determining a concentration of a target component in a sample gas such as a gas discharged from a chemical factory or a steel mill, a combustion gas of a boiler or a combustion furnace, atmospheric air, or an automobile exhaust gas, there is known an infrared gas analyzer using a non-dispersive infrared absorption method (NDIR).

In a gas measurement device such as an infrared gas analyzer that utilizes optical absorption characteristics of the target component, an error may occur in the measurement of a target component due to an influence of components other than the target component in the sample gas. Specifically, when an interference component which has an absorption wavelength range at least partially overlapping with an absorption wavelength range of the target component is present in the sample gas, an error may occur in the measurement of the target component due to the influence of the interference component. Therefore, it is required to measure a plurality of gas components in the sample gas.

PTL 1 discloses a non-dispersive infrared gas analyzer which includes a first radiation receiver and a second radiation receiver, and the second radiation receiver is disposed behind the first radiation receiver.

PTL 2 and PTL 3 disclose an analyzer which includes a light source, a sample cell, and a NDIR detector provided for each target component.

CITATION LIST

PATENT LITERATURE

PTL 1: Japanese Patent Laying-Open No. H3-170848
PTL 2: Japanese Patent Laying-Open No. H9-318534
PTL 3: Japanese Utility Model Laying-Open No. S61-199657

SUMMARY OF INVENTION

TECHNICAL PROBLEM

As disclosed in PTL 1, in the case of measuring a plurality of components, if a plurality of detectors, each of which corresponds to a respective one of a plurality of components, are disposed in series, the optical path becomes long, and when a detector filled with a gas is used, light is absorbed by the gas and thereby is attenuated, which reduces the detection sensitivity.

As disclosed in PTL 2 and PTL 3, if a plurality of detection units, each of which includes a light source, a sample cell and a detector, are provided for each of a plurality of components, the overall size of the gas measurement device will become larger.

It is an object of the present disclosure to provide a gas measurement device capable of suppressing a decrease in detection sensitivity while suppressing an increase in the overall size of the gas measurement device.

SOLUTION TO PROBLEM

A gas measurement device of the present disclosure measures a sample gas including a plurality of gas components, absorption wavelength ranges of the plurality of gas components at least partially overlapping with each other. The gas measurement device includes: a first detection unit that detects a first component in the sample gas; a second detection unit that detects a second component and a third component in the sample gas, each of the second and third components having an absorption wavelength range at least partially overlapping with an absorption wavelength range of the first component; and an arithmetic unit that determines a concentration of the first component by correcting a detection value of the first component detected by the first detection unit using a plurality of detection values detected by the second detection unit. The first detection unit includes: a first light source; a first sample cell filled with the sample gas;

and a first detector that detects light passing through the first sample cell to detect a light intensity thereof in the absorption wavelength range of the first component. The first sample cell and the first detector are disposed in series on a first optical path of light emitted from the first light source. The second detection unit includes: a second light source; a second sample cell filled with the sample gas; a second detector that detects light passing through the second sample cell to detect a light intensity thereof in the absorption wavelength range of the second component; and a third detector that detects light passing through the second sample cell to detect a light intensity thereof in the absorption wavelength range of the third component. The second sample cell, the second detector and the third detector are disposed in series on a second optical path of light emitted from the second light source.

ADVANTAGEOUS EFFECTS OF INVENTION

According to the present disclosure, since the detector that detects the first component is disposed on the first optical path which is different from the second optical path on which the detector that detects a component that interferes with the detection of the first component is disposed, it is possible to suppress attenuation of light and suppress a decrease in the detection sensitivity of the first component. In addition, since the second detector and the third detector are disposed in series on the second optical path, it is possible to suppress an increase in the overall size of the gas measurement device.

BRIEF DESCRIPTION OF DRAWINGS

Fig. 1 is a diagram illustrating a configuration of a gas measurement device.
Fig. 2 is a diagram illustrating functional blocks of a control unit.
Fig. 3 is a flowchart illustrating a process executed by a control unit to measure a sample gas.
Fig. 4 is a flowchart illustrating a process executed by the control unit to calculate an influence coefficient.
Fig. 5 is an infrared absorption spectrum of dinitrogen monoxide and carbon dioxide.
Fig. 6 is an infrared absorption spectrum of dinitrogen monoxide, methane, and sulfur dioxide.

DESCRIPTION OF EMBODIMENTS

Hereinafter, an embodiment of the present disclosure will be described in detail with reference to the drawings. In the drawings, the same or corresponding portions are denoted by the same reference numerals, and the description thereof will not be repeated.

<Configuration of Gas Measurement Device>

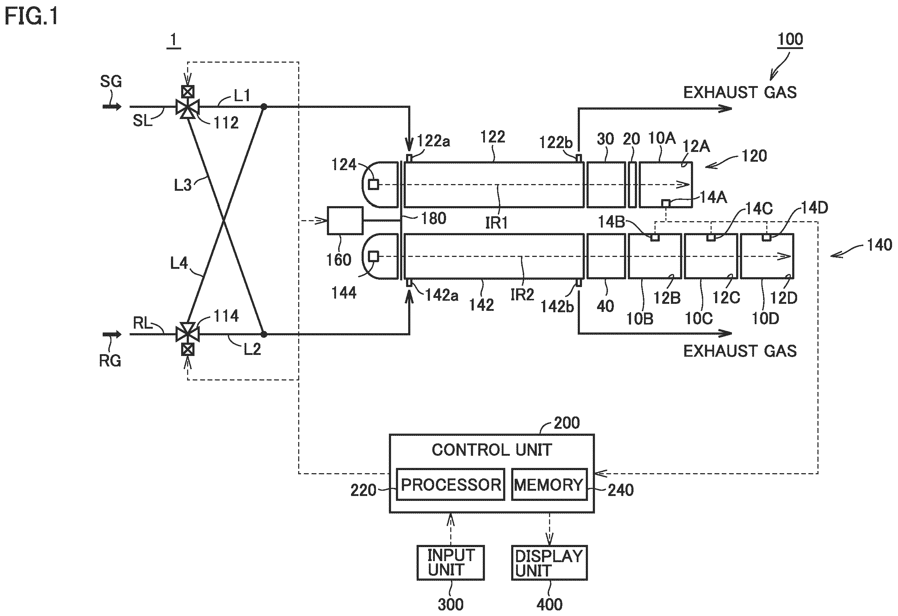

Fig. 1 is a diagram illustrating a configuration of a gas measurement device. The gas measurement device 1 measures a sample gas that contains a plurality of gas components.

The plurality of gas components each have an intrinsic absorption wavelength range. The transmitted light is partially absorbed and thereby attenuated by each of the plurality of gas components contained in the sample gas. The absorbance, which indicates the degree of light absorption, is proportional to the concentration of a gas component. Therefore, the concentration of a gas component can be determined from the absorbance thereof.

Hereinafter, a gas component to be measured may be referred to as a "target component". A gas component which has an absorption wavelength range at least partially overlapping with an absorption wavelength range of one gas component may be referred to as an "interference component that interferes with one gas component" or simply as an "interference component". A detection result obtained by detecting the light intensity in the absorption wavelength range of one gas component may be referred to as a "detection value of one gas component" or simply as a "detection value".

In the present disclosure, a sample gas that contains a target component and an interference component that interferes with the target component will be discussed. The detection value of the target component obtained by measuring the sample gas reflects the influence of light absorption by the target component and the influence of light absorption by the interference component. Therefore, even though the absorbance of the target component in the absorption wavelength range is detected, an error may occur in the measurement of the concentration of the target component due to the influence of the interference component.

The gas measurement device 1 according to the present embodiment measures a sample gas which is an exhaust gas and determines the concentration of a target component which is dinitrogen monoxide ($N_2O$). Further, the gas measurement device 1 detects the light intensity in the absorption wavelength range of each of sulfur dioxide ($SO_2$), methane ($CH_4$), and carbon dioxide ($CO_2$), which are interference components of dinitrogen monoxide. The gas measurement device 1 determines the concentration of dinitrogen monoxide by correcting the detection value of dinitrogen monoxide using the detection values of sulfur dioxide, methane, and carbon dioxide. Specifically, the exhaust gas includes a gas discharged from a chemical factory or a steel mill, a combustion gas of a boiler or a combustion furnace, an automobile exhaust gas, and the like. The sample gas is not limited to the exhaust gas, and may be, for example, atmospheric air.

With reference to Fig. 1, the gas measurement device 1 includes a detection unit 100, a control unit 200, an input unit 300, and a display unit 400. The detection unit 100 detects the light intensity in the absorption wavelength range of each of a plurality of gas components in the sample gas. More specifically, the detection unit 100 detects the light intensity in the absorption wavelength range of each of dinitrogen monoxide, sulfur dioxide, methane, and carbon dioxide.

The control unit 200 controls the detection unit 100. The control unit 200 also functions as an arithmetic device that determines the concentration of dinitrogen monoxide based on the detection value of each of the plurality of gas components detected by the detection unit 100. The control unit 200 includes a processor 220, a memory 240, and an input/output interface (not shown) for inputting and outputting various signals.

The memory 240 includes, for example, a ROM (read only memory) and a RAM (random access memory). The processor 220 loads programs stored in the ROM into the RAM or the like and executes the programs. The programs stored in the ROM are programs that describe a processing procedure of the control unit 200. The ROM stores various coefficients and various relational expressions which are used in determining the concentration of dinitrogen monoxide. The control unit 200 executes various procedures for determining the concentration of dinitrogen monoxide in accordance with these programs, various coefficients, and various relational expressions. The procedure is not limited to being processed by software, but may be processed by dedicated hardware (electronic circuit).

The input unit 300 is a device such as a mouse or a keyboard that receives a user's operation. For example, the input unit 300 receives an input of a concentration of a gas component in a reference gas and sends the concentration to the control unit 200. The display unit 400 is a display device such as a liquid crystal panel that displays the concentration of dinitrogen monoxide obtained by the control unit 200, for example.

<Configuration of Detection Unit>

With reference to Fig. 1, the detection unit 100 includes a measurement gas line SL, a reference gas line RL, two switching valves 112 and 114, a first detection unit 120, a second detection unit 140, a motor 160, and a sector 180.

A measurement gas SG is introduced into the measurement gas line SL. The measurement gas SG is a gas to be measured by the detection unit 100, and includes a sample gas and a reference gas used in preparation for the measurement of the sample gas.

A reference gas RG is introduced into the reference gas line RL. The reference gas RG is an inert gas such as nitrogen that has no infrared absorption, and is also called as zero gas. The reference gas RG may be any gas that does not interfere with any gas component to be measured in the detection unit 100, or may be a gas having infrared absorption.

The switching valve 112 is connected to the measurement gas line SL, a first line L1 and a third line L3. The switching valve 114 is connected to the reference gas line RL, a second line L2 and a fourth line L4.

The first line L1 is connected to the first detection unit 120. The second line L2 is connected to the second detection unit 140. The third line L3 is connected to the second line L2. The fourth line L4 is connected to the first line L1.

In other words, the switching valve 112 is connected to the measurement gas line SL, a flow path connected to the first sample cell 122, and a flow path connected to the second sample cell 142. The switching valve 114 is connected to the reference gas line RL, the flow path connected to the first sample cell 122, and the flow path connected to the second sample cell 142.

The control unit 200 controls the switching valve 112 to switch the flow path connected to the measurement gas line SL to the flow path connected to the first detection unit 120 or the flow path connected to the second detection unit 140 in a predetermined period. The control unit 200 controls the switching valves 112 and 114 in such a manner that the reference gas line RL is connected to the second sample cell 142 while the measurement gas line SL is being connected to the first detection unit 120. Further, the control unit 200 controls the switching valves 112 and 114 in such a manner that the reference gas line RL is connected to the first sample cell 122 while the measurement gas line SL is being connected to the second sample cell 142.

As a result, each of the first detection unit 120 and the second detection unit 140 is alternately filled with the reference gas and the sample gas. More specifically, the second detection unit 140 is filled with the sample gas while the first detection unit 120 is being filled with the reference gas, and the second detection unit 140 is filled with the reference gas while the first detection unit 120 is being filled with the sample gas.

The motor 160 rotates the sector 180 in accordance with a command from the control unit 200. As to be described later, the sector 180 is provided between the first sample cell 122 and a first light source 124 and between the second sample cell 142 and a second light source 144. The sector 180 has a light shielding portion and a light transmitting portion, and is configured to permit or block irradiation of light from the first light source 124 to the first sample cell 122. Further, the sector 180 is also configured to permit or block irradiation of light from the second light source 144 to the second sample cell 142.

In the measurement of gas components using the gas measurement device 1, the first detection unit 120 mainly detects the light intensity in the absorption wavelength range of a target component. The first detection unit 120 includes a first sample cell 122, a first light source 124, a first detector 10A that detects the light intensity in the absorption wavelength range of dinitrogen monoxide, an optical filter 20, and a first gas filter 30. The first sample cell 122, the first gas filter 30, the optical filter 20, and the first detector 10A are disposed on a first optical path IR1 of the first light source 124 in this order.

In the measurement of gas components using the gas measurement device 1, the second detection unit 140 mainly detects the light intensity in the absorption wavelength range of an interference component that interferes with the target component. The second detection unit 140 includes a second light source 144, a second sample cell 142, a second gas filter 40, a second detector 10B that detects the light intensity in the absorption wavelength range of sulfur dioxide, a third detector 10C that detects the light intensity in the absorption wavelength range of methane, and a fourth detector 10D that detects the light intensity in the absorption wavelength range of carbon dioxide. The second sample cell 142, the second gas filter 40, the second detector 10B, the third detector 10C, and the fourth detector 10D are disposed on a second optical path IR2 of the second light source 144 in this order.

As described above, the first detector 10A that detects dinitrogen monoxide is disposed on the first optical path IR1, which is different from the second optical path IR2 on which the detector that detects an interference component of dinitrogen monoxide is disposed. Therefore, the attenuation of light can be suppressed, and a decrease in detection sensitivity of dinitrogen monoxide can be suppressed. In addition, since the plurality of detectors (the second detector 10B, the third detector 10C, and the fourth detector 10D), each of which is configured to detect an interference component of dinitrogen monoxide, are disposed in series on the second optical path IR2, it is possible to suppress an increase in the overall size of the gas measurement device 1.

<Configuration of First Detection Unit>

In the measurement of gas components using the gas measurement device 1, the first detection unit 120 mainly detects the light intensity in the absorption wavelength range of a target component. In the present embodiment, the first detection unit 120 detects the light intensity in the absorption wavelength range of dinitrogen monoxide. The first detection unit 120 includes a first sample cell 122, a first light source 124, a first detector 10A, an optical filter 20, and a first gas filter 30.

The first light source 124 emits light that includes at least an absorption wavelength range of the target component. The first light source 124 is not particularly limited, and may be, for example, a light source equipped with a nichrome wire.

The first sample cell 122, the first gas filter 30, the optical filter 20, and the first detector 10A are disposed on the first optical path IR1 of the first light source 124 in this order. Although not illustrated in the figures, a window through which light from the first light source 124 passes is formed at both ends of each of the first sample cell 122, the first gas filter 30, and the optical filter 20 on the first optical path IR1. Thereby, the light from the first light source 124 passes through the first sample cell 122, the first gas filter 30, the optical filter 20, and the first detector 10A in this order.

The first sample cell 122 is hollow inside, and includes a gas inlet 122a and a gas outlet 122b. The measurement gas SG or the reference gas RG is supplied from the first line L1 into the first sample cell 122 through the gas inlet 122a, and is discharged outside through the gas outlet 122b.

The first detector 10A detects the light intensity in the absorption wavelength range of dinitrogen monoxide. The first detector 10A includes a first housing 12A filled with dinitrogen monoxide as a gas component, and a first detection unit 14A that detects the pressure in the first housing 12A. In the present embodiment, the first detector 10A indirectly detects the light intensity in the absorption wavelength range intrinsic to dinitrogen monoxide by detecting a pressure change in the first housing 12A. The first detector 10A detects light from the first light source 124 passing through the first sample cell 122, the first gas filter 30, and the optical filter 20 in this order.

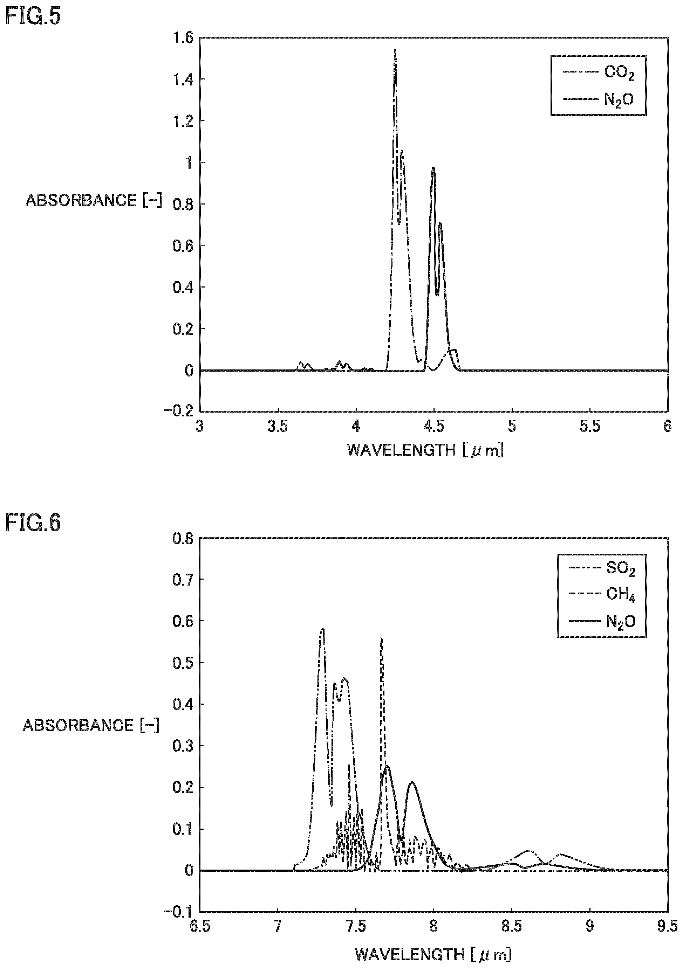

The optical filter 20 transmits light in one specific absorption wavelength range, but does not transmit light in another specific absorption wavelength range. As to be described later with reference to Figs. 5 and 6, dinitrogen monoxide has a first absorption wavelength range (an absorption wavelength range around 7.8 $\mu$m) and a second absorption wavelength range (an absorption wavelength range around 4.5 $\mu$m). The second absorption wavelength range of the two absorption wavelength ranges of dinitrogen monoxide at least partially overlaps the absorption wavelength range of carbon dioxide. The optical filter 20 transmits light in the first absorption wavelength range of dinitrogen monoxide, but does not transmit light in the second absorption wavelength range of dinitrogen monoxide overlapping with the absorption wavelength range of carbon dioxide. For example, the optical filter 20 transmits light having a wavelength longer than 5.5 $\mu$m to 6.5 $\mu$m, but does not transmit light having a wavelength of 5.5 $\mu$m to 6.5 $\mu$m or less.

The first gas filter 30 is filled with an interference gas component having an absorption wavelength range at least partially overlapping with the first absorption wavelength range of dinitrogen monoxide. In the present embodiment, the first gas filter 30 is filled with methane as the gas component.

The arrangement order of the optical filter 20 and the first gas filter 30 may be reversed. Specifically, the first sample cell 122, the optical filter 20, the first gas filter 30, and the first detector 10A may be disposed on the first optical path IR1 in this order.

<Second Detection Unit>

In the measurement of gas components using the gas measurement device 1, the second detection unit 140 mainly detects the light intensity in the absorption wavelength range of an interference component that interferes with the target component. In the present embodiment, the second detection unit 140 includes a second light source 144, a second sample cell 142, a second gas filter 40, a second detector 10B, a third detector 10C, and a fourth detector 10D.

The second light source 144 and the second sample cell 142 are the same as the first light source 124 and the first sample cell 122 of the first detection unit 120, respectively. Specifically, the measurement gas SG or the reference gas RG is supplied from the second line L2 into the second sample cell 142 through a gas inlet 142a of the second sample cell 142, and is discharged outside through a gas outlet 142b thereof.

The second sample cell 142, the second gas filter 40, the second detector 10B, the third detector 10C, and the fourth detector 10D are disposed on the second optical path IR2 of the second light source 144 in this order. Although not illustrated in the figures, a window through which light from the second light source 144 passes is formed at both ends of each of the second sample cell 142, the second gas filter 40, the second detector 10B, and the third detector 10C on the second optical path IR2. Thereby, the light from the second light source 144 passes through the second sample cell 142, the second gas filter 40, the second detector 10B, the third detector 10C, and the fourth detector 10D in this order.

The second detector 10B detects the light intensity in the absorption wavelength range of sulfur dioxide. The second detector 10B includes a second housing 12B filled with sulfur dioxide as a gas component, and a second detection unit 14B that detects the pressure in the second housing 12B. The second detector 10B indirectly detects the light intensity in the absorption wavelength range intrinsic to sulfur dioxide by detecting a pressure change in the second housing 12B. The second detector 10B detects light from the second light source 144 passing through the second sample cell 142 and the second gas filter 40 in this order.

The third detector 10C detects the light intensity in the absorption wavelength range of methane. The third detector 10C includes a third housing 12C filled with methane as a gas component and a third detection unit 14C that detects the pressure in the third housing 12C. The third detector 10C indirectly detects the light intensity in the absorption wavelength range intrinsic to methane by detecting a pressure change in the third housing 12C. The third detector 10C detects light from the second light source 144 passing through the second sample cell 142, the second gas filter 40, and the second detector 10B in this order.

The fourth detector 10D detects the light intensity in the absorption wavelength range of carbon dioxide. The fourth detector 10D includes a fourth housing 12D filled with carbon dioxide as a gas component, and a fourth detection unit 14D that detects the pressure in the fourth housing 12D. The fourth detector 10D indirectly detects the light intensity in the absorption wavelength range intrinsic to carbon dioxide by detecting a pressure change in the fourth housing 12D. The fourth detector 10D detects light from the second light source 144 passing through the second sample cell 142, the second gas filter 40, the second detector 10B, and the third detector 10C in this order.

The second gas filter 40 is filled with carbon dioxide. The second gas filter 40 reduces the influence of carbon dioxide on the measurement of sulfur dioxide and methane by reducing the light intensity in the absorption wavelength range of carbon dioxide overlapping with the absorption wavelength range of sulfur dioxide and the absorption wavelength range of methane.

<Software Configuration of Control Unit>

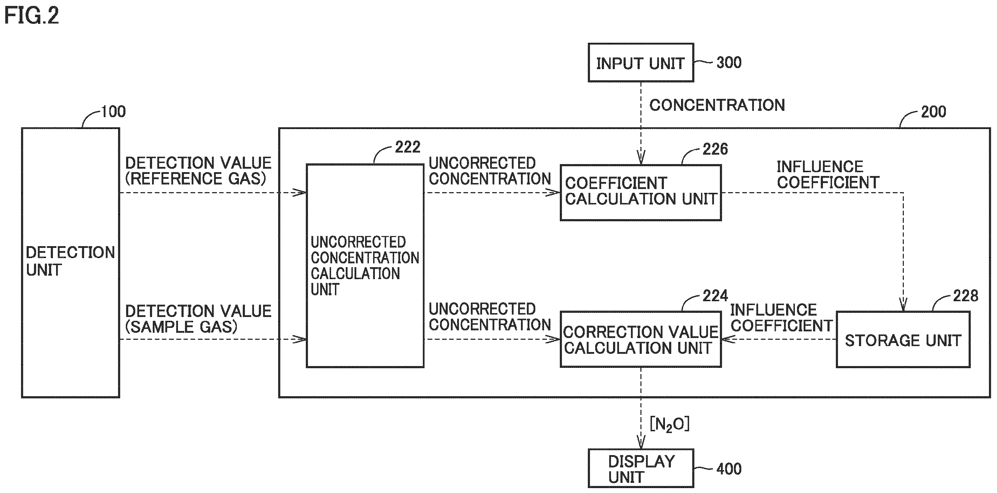

Fig. 2 is a diagram illustrating functional blocks of a control unit. The control unit 200 includes an uncorrected concentration calculation unit 222, a correction value calculation unit 224, a coefficient calculation unit 226, and a storage unit 228. Each function illustrated in Fig. 2 is realized by the processor 220 executing a program. The storage unit 228 corresponds to the memory 240.

The uncorrected concentration calculation unit 222 determines the concentration of the gas component in the sample gas by applying a detection signal (reference signal) of the reference gas sent to the detection unit 100 and a detection signal (measurement signal) of the sample gas sent to the detection unit 100 to a predetermined arithmetic expression. In other words, the reference signal and the measurement signal correspond to the "detection value".

The uncorrected concentration calculation unit 222 determines an uncorrected concentration of dinitrogen monoxide based on the reference signal and the measurement signal detected by the first detector 10A. Similarly, the uncorrected concentration calculation unit 222 determines an uncorrected concentration of sulfur dioxide based on the reference signal and the measurement signal detected by the second detector 10B, determines an uncorrected concentration of methane based on the reference signal and the measurement signal detected by the third detector 10C, and determines an uncorrected concentration of carbon dioxide based on the reference signal and the measurement signal detected by the fourth detector 10D.

In the present embodiment, the uncorrected concentration calculation unit 222 is configured to use a reference gas, but it may calculate the concentration based on a measurement signal without using the reference gas. In addition, the gas measurement device 1 may obtain the reference signal using a reference cell which is filled and sealed with the reference gas, instead of allowing the reference gas to flow therethrough.

The correction value calculation unit 224 determines the concentration of dinitrogen monoxide by correcting the detection value of dinitrogen monoxide detected by the detection unit 100 using the detection values of carbon dioxide, methane and sulfur dioxide that interfere with the measurement of dinitrogen monoxide. The concentration of each gas component is determined according to the following expression (1) to (4). For a given component A, an uncorrected concentration that corresponds to the detection value is represented by A, and a corrected concentration is represented by [A].

[Math. 1]

$$[CH_4] = CH_4 - (a[N_2O] + b[SO_2] + g[CO_2]) \qquad (1)$$

[Math. 2]

$$[N_2O] = N_2O - (c[CH_4] + d[SO_2] + h[CO_2] \qquad (2)$$

[Math. 3]

$$[SO_2] = SO_2 - (e[CH_4] + f[N_2O] + i[CO_2] \qquad (3)$$

[Math. 4]

$$[CO_2] = CO_2 \qquad (4)$$

In the expression (1), "a", "b" and "g" are influence coefficients indicating a degree of influence of dinitrogen monoxide, sulfur dioxide, and carbon dioxide on the measurement of methane, respectively. **In** the expression (2), "c", "d" and "h" are influence coefficients indicating a degree of influence of methane, sulfur dioxide, and carbon dioxide on the measurement of dinitrogen monoxide, respectively. **In** the expression (3), "e", "f" and "i" are influence coefficients indicating a degree of influence of methane, dinitrogen monoxide, and carbon dioxide on the measurement of sulfur dioxide, respectively.

As illustrated by the expressions (1) to (3), the concentration of each of the plurality of gas components in the sample gas is expressed as a corrected concentration which is obtained by subtracting a measurement error caused by one or more interference components that interfere with the gas component on the measurement of the gas component from an uncorrected concentration that corresponds to the detection value of the gas component. The measurement error on the measurement of the gas component is represented as a linear sum of the corrected concentration of the interference component that interferes with the gas component and the influence coefficient indicating the degree of influence of the interference component on the measurement of the gas component.

In the present embodiment, the sample gas is exhaust gas. The concentration of carbon dioxide in the exhaust gas is as high as 100 times or more the concentration of the other components (dinitrogen monoxide, sulfur dioxide, and methane). In the present embodiment, since the concentration of carbon dioxide is extremely higher than that of the other components (dinitrogen monoxide, sulfur dioxide, and methane), as illustrated in the expression (4), the other components are considered to have no influence on the measurement of carbon dioxide.

The correction value calculation unit 224 determines the concentration of dinitrogen monoxide based on the influence coefficient and the uncorrected concentration corresponding to each detection value of the gas components in accordance with the relationships in the expressions (1) to (4). Specifically, by solving the simultaneous equations denoted by the expressions (1) to (4), the concentration of dinitrogen monoxide is represented as a linear sum of the uncorrected concentration ($N_2O$, $CH_4$, $SO_2$, $CO_2$) corresponding to the detection value and an intermediate coefficient represented by a plurality of influence coefficients. Therefore, the correction value calculation unit 224 can determine the concentration of dinitrogen monoxide based on the influence coefficient or intermediate coefficient and the uncorrected concentration corresponding to each detection value of the gas components. Note that it is not limited to determining the concentration in accordance with the relationships in the expressions (1) to (4). For example, the correction value calculation unit 224 may determine the concentration using the influence coefficient without using the intermediate coefficient.

The coefficient calculation unit 226 determines the influence coefficient based on the detection value obtained by detecting a reference gas having a known concentration and the concentration of the reference gas input from the input unit 300. Specifically, the influence coefficients "a" to "i" in the expressions (1) to (3) are determined as follows.

The detection unit 100 detects a reference gas composed of dinitrogen monoxide having a known concentration in each of the second detector 10B and the third detector 10C. Based on the plurality of detection values obtained in this manner and the known concentration, the influence coefficient "a" in the expression (1) and the influence coefficient "f" in the expression (3) are determined.

Specifically, the control unit 200 determines the influence coefficient "a" by dividing the uncorrected concentration of methane corresponding to the detection value of the third detector 10C by the input concentration of dinitrogen monoxide according to the relationship in the expression (1). The control unit 200 determines the influence coefficient "f" by dividing the uncorrected concentration of sulfur dioxide corresponding to the detection value of the second detector 10B by the input concentration of dinitrogen monoxide in accordance with the relationship in the expression (3).

The detection unit 100 detects a reference gas composed of sulfur dioxide having a known concentration in each of the first detector 10A and the third detector 10C. Based on the plurality of detection values obtained in this manner and the known concentration, the influence coefficient "b" in the expression (1) and the influence coefficient "d" in the expression (2) are determined.

Specifically, the control unit 200 determines the influence coefficient "b" by dividing the uncorrected concentration of methane corresponding to the detection value of the third detector 10C by the input concentration of sulfur dioxide in accordance with the relationship in the expression (1). The control unit 200 determines the influence coefficient "d" by dividing the uncorrected concentration of dinitrogen monoxide corresponding to the detection value of the first detector 10A by the input concentration of sulfur dioxide in accordance with the relationship in the expression (2).

The detection unit 100 detects a reference gas composed of methane having a known concentration in each of the first detector 10A and the second detector 10B. Based on the plurality of detection values obtained in this manner and the known concentration, the influence coefficient "c" in the expression (2) and the influence coefficient "e" in the expression (3) are determined.

Specifically, the control unit 200 determines the influence coefficient "c" by dividing the uncorrected concentration of dinitrogen monoxide corresponding to the detection value of the first detector 10A by the input concentration of methane in accordance with the relationship in the expression (2). The control unit 200 determines the influence coefficient "e" by dividing the uncorrected concentration of sulfur dioxide corresponding to the detection value of the second detector 10B by the input concentration of methane in accordance with the relationship in the expression (3).

The detection unit 100 detects a reference gas composed of carbon dioxide having a known concentration in each of the first detector 10A, the second detector 10B and the third detector. Based on the plurality of detection values obtained in this manner and the known concentration, the influence coefficients "g", "h" and "i" in the expressions (1) to (3) are determined.

Specifically, the control unit 200 determines the influence coefficient "g" by dividing the uncorrected concentration of methane corresponding to the detection value of the third detector 10C by the input carbon dioxide concentration in accordance with the relationship in the expression (1). The control unit 200 determines the influence coefficient "h" by dividing the uncorrected concentration of dinitrogen monoxide corresponding to the detection value of the first detector 10A by the input concentration of carbon dioxide in accordance with the relationship in the expression (2). The control unit 200 determines the influence coefficient "i" by dividing the uncorrected concentration of sulfur dioxide corresponding to the detection value of the second detector 10B by the input concentration of carbon dioxide in accordance with the relationship in the expression (3).

The coefficient calculation unit 226 stores the determined influence coefficients "a" to "i" in the storage unit 228. The coefficient calculation unit 226 may determine an intermediate coefficient from each of the determined influence coefficients "a" to "i", and store at least one of the influence coefficient and the intermediate coefficient in the storage unit 228. The coefficient calculation unit 226 may determine only the intermediate coefficient without determining the influence coefficient and store the determined intermediate coefficient in the storage unit 228.

<Method of Determining Concentration of Target Component>

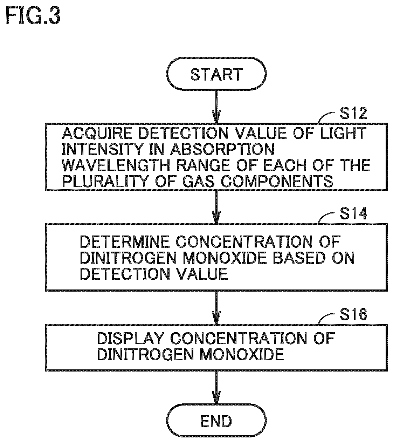

A method of determining the concentration of a target component will be described with reference to Fig. 3. Fig. 3 is a flowchart illustrating a process executed by the control unit to measure a sample gas. Hereinafter, each step will be abbreviated as "S".

In S12, the control unit 200 acquires, from the detection unit 100, the detection value of each of the plurality of gas components obtained by detecting light passing through the sample gas to detect the light intensity thereof in the absorption wavelength range of each of the plurality of gas components. Specifically, the detection unit 100 detects the light intensity in each absorption wavelength range of dinitrogen monoxide, sulfur dioxide, methane, and carbon dioxide.

The detection unit 100 sends each detection value to the control unit 200.

In S14, the control unit 200 determines the concentration of dinitrogen monoxide based on the detection value of each of the plurality of gas components. More specifically, the control unit 200 determines the concentration of dinitrogen monoxide based on the plurality of influence coefficients "a" to "f" and the uncorrected concentration of the gas component corresponding to each detection value in accordance with the relationships in the above-described expressions (1) to (4).

In S16, the control unit 200 displays the determined concentration of dinitrogen monoxide on the display unit 400.

As described above, the control unit 200 determines the concentration of dinitrogen monoxide in the sample gas.

<Method of Determining Influence Coefficient>

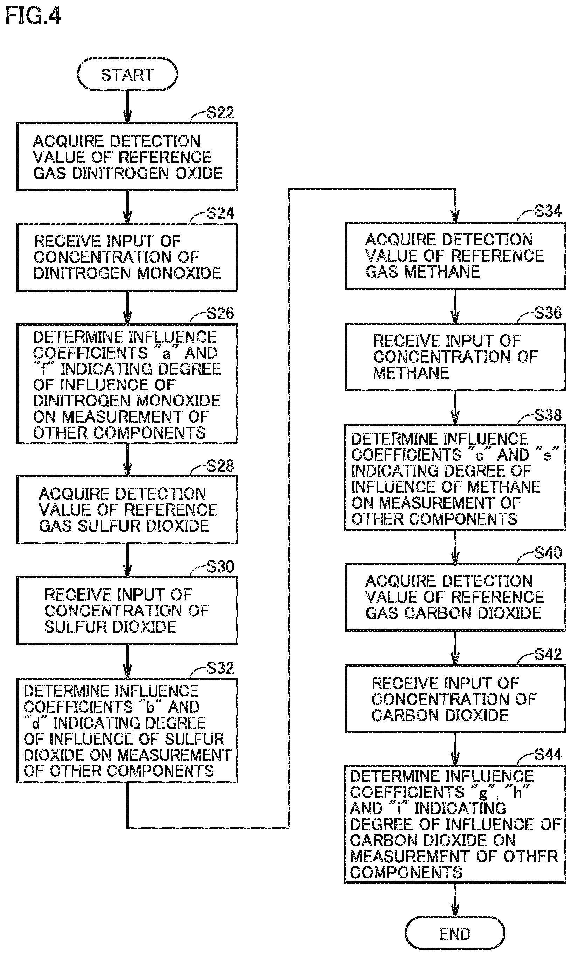

A method of determining an influence coefficient will be described with reference to Fig. 4. Fig. 4 is a flowchart illustrating a process executed by the control unit to determine an influence coefficient.

In S22, the control unit 200 acquires detection values obtained by detecting a reference gas made of dinitrogen oxide having a known concentration by each of the second detector 10B and the third detector 10C. In S24, the control unit 200 receives an input of the concentration of dinitrogen monoxide from the input unit 300.

In S26, the control unit 200 determines an influence coefficient "a" indicating the degree of influence of dinitrogen monoxide on the measurement of methane in the expression (1) and an influence coefficient "f" indicating the degree of influence of dinitrogen monoxide on the measurement of sulfur dioxide in the expression (3).

In S28, the control unit 200 acquires a detection value obtained by detecting a reference gas made of sulfur dioxide having a known concentration by each of the first detector 10A and the third detector 10C. In S30, the control unit 200 receives an input of the concentration of sulfur dioxide from the input unit 300.

In S32, the control unit 200 determines an influence coefficient "b" indicating the degree of influence of sulfur dioxide on the measurement of methane in the expression (1) and an influence coefficient "d" indicating the degree of influence of sulfur dioxide on the measurement of dinitrogen monoxide in the expression (2).

In S34, the control unit 200 acquires a detection value obtained by detecting a reference gas made of methane having a known concentration by each of the first detector 10A and the second detector 10B. In S36, the control unit 200 receives an input of the concentration of methane from the input unit 300.

In S38, the control unit 200 obtains an influence coefficient "c" indicating the degree of influence of methane on the measurement of dinitrogen monoxide in the expression (2) and an influence coefficient "e" indicating the degree of influence of methane on the measurement of sulfur dioxide in the expression (3).

In S40, the control unit 200 acquires a detection value obtained by detecting a reference gas made of carbon dioxide having a known concentration by each of the first detector 10A, the second detector 10B, and the third detector 10C. In S42, the control unit 200 receives an input of the concentration of carbon dioxide from the input unit 300.

In S44, the control unit 200 determines an influence coefficient "g" indicating the degree of influence of carbon dioxide on the measurement of methane in the expression (1), an influence coefficient "h" indicating the degree of influence of carbon dioxide on the measurement of dinitrogen monoxide in the expression (2), and an influence coefficient "i" indicating the degree of influence of carbon dioxide on the measurement of sulfur dioxide in the expression (3).

As described above, the gas measurement device 1 determines an influence coefficient indicating the degree of influence of an interference component that interferes with one gas component on the measurement of the one gas component.

<Example and Comparative Example>

Table 1 shows results of an example in which each uncorrected concentration determined by the gas measurement device 1 illustrated in Fig. 1 from the sample gas was corrected by the method according to the present embodiment and a comparative example in which each uncorrected concentration was corrected by the conventional method.

[Table 1]

| | Uncorrected concentration | Corrected concentration | |
|---|---|---|---|
| | | Comparative example | Example |
| $CO_2$ [vol%] | 10.0 | 10.0 | 10.0 |
| $CH_4$ [ppm] | 100 | 80.9 | 83.6 |
| $N_2O$ [ppm] | 100 | 80.2 | 83.1 |
| $SO_2$ [ppm] | 100 | 88.1 | 90.0 |

In the example, each uncorrected concentration was corrected according to the above-described expressions (1) to (4). In the comparative example, each uncorrected concentration was corrected according to the following expressions (5) to (7) and the above-described expression (4). The influence coefficients "a" to "i" are common in the example and the comparative example.

[Math. 5]

$$[CH_4] = CH_4 - (aN_2O + bSO_2 + gCO_2) \qquad (5)$$

[Math. 6]

$$[N_2O] = N_2O - (cCH_4 + dSO_2 + hCO_2 \qquad (6)$$

[Math. 7]

$$[SO_2] = SO_2 - (eCH_4 + fN_2O + iCO_2 \qquad (7)$$

As illustrated in the expressions (5) to (7), in the comparative example, the uncorrected concentration corresponding to the detection value is corrected by using the uncorrected concentration of the interference component without considering the influence of the other components on the measurement of the interference component. As shown in Table 1, there is a difference in the corrected concentration between the comparative example and the example. This difference is caused by the influence of the other components on the measurement of the interference component, and the concentration of the target component can be more accurately determined by taking into consideration the influence of the other components on the measurement of the interference component.

<Infrared Absorption Spectrum of Each Gas Component>

The infrared absorption spectrum of each gas component will be described with reference to Figs. 5 and 6. Fig. 5 is an infrared absorption spectrum of dinitrogen monoxide and carbon dioxide. Fig. 6 is an infrared absorption spectrum of dinitrogen monoxide, methane, and sulfur dioxide. In Figs. 5 and 6, the spectrum indicated by the solid line is the infrared absorption spectrum of dinitrogen monoxide. In Fig. 5, the spectrum indicated by a one-dot chain line is an infrared absorption spectrum of carbon dioxide. In Fig. 6, the spectrum indicated by a two-dot chain line is an infrared absorption spectrum of sulfur dioxide. In Fig. 6, the spectrum indicated by a broken line is an infrared absorption spectrum of methane. In Figs. 5 and 6, the horizontal axis represents wavelength, and the vertical axis represents absorbance.

As illustrated in Figs. 5 and 6, dinitrogen monoxide has an absorption wavelength range around 4.5 μm and around 7.8 μm. As illustrated in Fig. 5, carbon dioxide has an absorption wavelength range around 4.25 μm, which at least partially overlaps with the absorption wavelength range around 4.5 μm of dinitrogen monoxide.

In the present embodiment, the first detection unit 120 includes an optical filter 20 that transmits light in the first absorption wavelength range, but does not transmit light in the second absorption wavelength range overlapping with the absorption wavelength range of carbon dioxide. As illustrated in Fig. 1, since the first detector 10A detects the light passing through the optical filter 20, it detects the light intensity in the absorption wavelength range around 7.8 μm, not around 4.5 μm where the absorption wavelength range overlaps with the absorption wavelength range of carbon dioxide.

As illustrated in Figs. 5 and 6, comparing the absorption wavelength range of dinitrogen monoxide around 7.8 μm and the absorption wavelength range thereof around 4.5 μm, the light absorption around 7.8 μm detected by the first detector 10A is weaker than the light absorption around 4.5 μm. However, in the present embodiment, exhaust gas is assumed as the sample gas, and the concentration of carbon dioxide in the exhaust gas is several percentages whereas the concentration of dinitrogen monoxide is several ppm. Since the concentration of carbon dioxide is higher than that of dinitrogen monoxide, the influence of carbon dioxide on the measurement of dinitrogen monoxide is extremely large.

Therefore, the first detection unit 120 according to the present embodiment detects the light intensity in the absorption wavelength range of dinitrogen monoxide around 7.8 μm, which is weak absorption but does not overlap with the absorption wavelength range of carbon dioxide. Thus, it is possible to reduce the influence of carbon dioxide, which is present in the sample gas at a high concentration, on the measurement of dinitrogen monoxide, which makes it possible to measure dinitrogen monoxide with higher accuracy.

The exhaust gas may contain carbon monoxide (CO). Although not shown, the absorption wavelength range of carbon monoxide is around 4.7 μm, which overlaps with the absorption wavelength range of carbon monoxide around 4.5 μm. Therefore, by disposing the optical filter 20, it is possible to reduce the influence of carbon monoxide on the measurement of dinitrogen monoxide, which makes it possible to measure dinitrogen monoxide with higher accuracy.

The first detector 10A detects the light intensity in the absorption wavelength range of dinitrogen monoxide

around 7.8 μm. As illustrated in Fig. 6, methane has an absorption wavelength range around 7.8 μm, sulfur dioxide has an absorption wavelength range around 7.4 μm, and the absorption wavelength range of each gas component at least partially overlaps with the absorption wavelength range of dinitrogen monoxide around 7.8 μm. Therefore, in addition to the influence of light absorption by dinitrogen monoxide, the detection value of the first detector 10A reflects the influence of light absorption by each of sulfur dioxide and methane.

**In** the present embodiment, the first detection unit 120 includes a first gas filter 30 filled with a gas component which has an absorption wavelength range at least partially overlapping with the first absorption wavelength range of dinitrogen monoxide which is different from the second absorption wavelength range thereof that overlaps with the absorption wavelength range of carbon dioxide. This reduces the light intensity in the absorption wavelength range of the gas component at least partially overlapping the first absorption wavelength range of dinitrogen monoxide. As a result, it is possible to reduce the influence of the gas component at least partially overlapping with the first absorption wavelength range on the measurement of dinitrogen monoxide, which makes it possible to measure dinitrogen monoxide with higher accuracy.

**In** the present embodiment, the first gas filter 30 is filled with methane gas. The absorption wavelength range of methane overlaps more with that of dinitrogen monoxide than that of sulfur dioxide. Therefore, the influence of methane on the measurement of dinitrogen monoxide is greater than that of sulfur dioxide. **In** the present embodiment, it is possible to reduce the light intensity in the absorption wavelength range of methane which has a large influence on the measurement of dinitrogen monoxide, which makes it possible to measure dinitrogen monoxide with higher accuracy.

**In** addition to the first gas filter 30 filled with methane, a gas filter filled with sulfur dioxide may be further provided on the first optical path IR1 between the first sample cell 122 and the first detector 10A. The gas component filled in the first gas filter 30 may be sulfur dioxide instead of methane.

The effect of the first gas filter 30 can be adjusted by changing the partial pressure of the filling gas or changing the distance for the light from the first light source 124 to pass through the first gas filter 30. For example, the effect of the first gas filter 30 may be increased by increasing the partial pressure of the filling gas or increasing the distance for the light from the first light source 124 to pass through the first gas filter 30. However, when the effect of the first gas filter 30 is increased, the light intensity in the absorption wavelength range of dinitrogen monoxide detected by the first detector 10A may decrease, resulting in a decrease in the detection sensitivity of dinitrogen monoxide. Therefore, the partial pressure of the filling gas and the distance for the light from the first light source 124 to pass through the first gas filter 30 should be adjusted to ensure the detection sensitivity of dinitrogen monoxide.

**In** the present embodiment, the first detection unit 120 cuts light in the absorption wavelength range of carbon dioxide with the optical filter 20. However, carbon dioxide also absorbs light in the absorption wavelength range around 7.8 μm, albeit slightly. As described above, the concentration of carbon dioxide in the exhaust gas is higher than that of dinitrogen monoxide. Although the light absorption by carbon dioxide is slight, it affects the measurement of dinitrogen monoxide. Therefore, in the present embodiment, as illustrated by the expression (2), the control unit 200 determines the concentration of dinitrogen monoxide, taking into consideration the influence of carbon dioxide on the measurement of dinitrogen monoxide.

Similarly, carbon dioxide also absorbs light in the respective absorption wavelength ranges of sulfur dioxide and methane, albeit slightly. The concentration of carbon dioxide in the exhaust gas is several percentages whereas the concentration of each of sulfur dioxide and methane is several ppm. Therefore, as illustrated by the expressions (1) and (3), the control unit 200 determines the concentration of dinitrogen monoxide, taking into consideration the influence of carbon dioxide on the measurement of sulfur dioxide and methane.

The second detection unit 140 according to the present embodiment includes a second gas filter 40 filled with carbon dioxide. As described above, even the light absorption by carbon dioxide is slight, it affects the measurement of sulfur dioxide and methane. Therefore, the second detection unit 140 includes the second gas filter 40 to reduce the light intensity in the absorption wavelength range of carbon dioxide overlapping with the absorption wavelength range of sulfur dioxide and the absorption wavelength range of methane. As a result, it is possible to reduce the influence of carbon dioxide on the measurement of sulfur dioxide and methane, which makes it possible to measure sulfur dioxide and methane with higher accuracy. When the effect of the second gas filter 40 is increased, the detection sensitivity of the fourth detector 10D may decrease. Therefore, the partial pressure of the filling gas in the second gas filter 40 and the distance for the light from the second light source 144 to pass through the second gas filter 40 should be adjusted to ensure the detection sensitivity of carbon dioxide is ensured.

As illustrated in Fig. 6, since the absorption wavelength range of sulfur dioxide and the absorption wavelength range of methane partially overlap with each other, sulfur dioxide affects the measurement of methane. The second detector 10B that includes the second housing 12B filled with sulfur dioxide is disposed in the second detection unit 140 between the third detector 10C that detects the light intensity in the absorption wavelength range of methane and the second sample cell 142. Therefore, the third detector 10C detects the light passing through the second sample cell 142 and the second housing 12B in this order. Thus, the second housing 12B functions as a gas filter to reduce the light intensity in the absorption wavelength range of sulfur dioxide overlapping with the absorption wavelength range of methane. As a result, it is possible to reduce the measurement error of methane caused by sulfur dioxide, which makes it possible to measure methane with higher accuracy.

The third detector 10C may be disposed on the second optical path IR2 between the second sample cell 142 and the second detector 10B. With this arrangement, the methane-filled third housing 12C of the third detector 10C functions as a gas filter to reduce the light intensity in the absorption wavelength range of methane overlapping with the absorption wavelength range of sulfur dioxide. As a result, it is possible to reduce the measurement error of sulfur dioxide caused by methane, which makes it possible to measure sulfur dioxide with higher accuracy. The arrangement order of the second detector 10B and the third detector 10C may be determined according to whether the measurement accuracy of methane or the measurement accuracy of sulfur dioxide is desired to be increased.

In the present embodiment, it is described that the gas measurement device 1 uses infrared light, but it may use ultraviolet light depending on the absorption wavelength range of the target component.

In the present embodiment, it is described that the light intensity is indirectly detected by detecting a pressure change of a cell which is sealed with a gas to be detected when transmitted light passes through the cell. The light intensity may be directly detected by a photoconductive element or the like. Further, it is described that the plurality of detectors (the first detector 10A to the fourth detector 10D) included in the detection unit 100 are common to each other in the method of detecting the light intensity. The plurality of detectors may differ from each other in the method of detecting the light intensity. For example, the first detector 10A and the fourth detector 10D which are disposed farthest from the light source each may be a detector equipped with a pyroelectric sensor, and the second detector 10B and third detector 10C each may be a detector configured as described in the above embodiment.

It is described that the gas measurement device 1 measures exhaust gas, it may measure other gases. Each detector may be adjusted according to the measurement target. The optical filter 20, the first gas filter 30, and the second gas filter 40 may also be adjusted according to the measurement target.

It is described that in order to measure the concentration of dinitrogen monoxide, the gas measurement device 1 includes detectors for detecting three interference components: sulfur dioxide, methane, and carbon dioxide. The gas measurement device 1 may include a detector for detecting at least one of sulfur dioxide, methane, and carbon dioxide, or may include a detector for detecting another interference component in addition to the detectors for detecting the three interference components.

The control unit 200 determines the concentration of dinitrogen monoxide on the assumption that other components has no influence on the measurement of carbon dioxide as shown in the expression (4).

In addition, when the measurement error caused by an interference component of one or more interference components that interfere with one gas component on the measurement of the one gas component is sufficiently smaller than the concentration of the one gas component, the control unit 200 may determine the concentration of a target component by assuming that the influence of the interference component on the measurement of the one gas component is zero. The measurement error caused by the interference component on the measurement of the one gas component may be determined by multiplying the corrected concentration of the interference component by an influence coefficient indicating the degree of influence of the interference component on the measurement of the one gas component.

For example, when the measurement error caused by an interference component on the measurement of one gas component is 1/1000 or less of the concentration of the one gas component, the influence of the interference component on the measurement of the one gas component may be set to zero. In addition, when the measurement error caused by the interference component on the measurement of the one gas component is 1/100 or less of the concentration of the one gas component, the influence of the interference component on the measurement of the one gas component may be set to zero. The criterion for setting the influence to zero may be determined in accordance with the accuracy required for the gas measurement device 1 and the assumed maximum concentration of the interference component in the sample gas.

For example, when the measurement error ($d[SO_2]$) caused by sulfur dioxide on the measurement of dinitrogen monoxide is 1/100 or less of the concentration ($[N_2O]$) of dinitrogen monoxide, the control unit 200 may determine the concentration of dinitrogen monoxide by setting the influence coefficient "d" in the expression (2) to zero.

In the embodiment described above, it is described that the gas measurement device 1 determines the concentration of dinitrogen monoxide using exhaust gas as the sample gas and dinitrogen monoxide as the target component. The sample gas may be another gas, and the target component may be another component. For example, the gas measurement device 1 may be configured to measure a sample gas that contains a target component and two or more kinds of interference components that interfere with the target component. Even in this case, by arranging a detector for detecting the target component and detectors for detecting a plurality of interference components on separate optical paths and arranging the detectors for detecting the plurality of interference components in series on the same optical path, it is possible to suppress a decrease in the detection sensitivity of the target component and an increase in the overall size of the gas measurement device.

In the above embodiment, it is described that the control unit 200 both controls the detection unit 100 and calculates the concentration. The gas measurement device 1 may include a control unit that controls the detection unit 100 and an arithmetic unit that calculates the concentration separately. In this case, each of the control unit and the arithmetic unit includes a processor, a memory, and an input/output interface.

[Aspects]

It will be understood by those skilled in the art that the embodiments described above are specific examples of the following aspects.

(First Aspect) A gas measurement device according to an aspect of the present invention measures a sample gas that contains a plurality of gas components whose absorption wavelength ranges at least partially overlap with each other. The gas measurement device includes: a first detection unit that detects a first component in the sample gas; a second detection unit that detects a second component and a third component, each of which has an absorption wavelength range at least partially overlapping with an absorption wavelength range of the first component in the sample gas; and an arithmetic unit that determines a concentration of the first component by correcting a detection value of the first component detected by the first detection unit using a plurality of detection values detected by the second detection unit. The first detection unit includes: a first light source; a first sample cell filled with the sample gas; and a first detector that detects light passing through the first sample cell to detect a light intensity thereof in the absorption wavelength range of the first component. The first sample cell and the first detector are disposed in series on a first optical path of light emitted from the first light source. The second detection unit includes: a second light source; a second sample cell filled with the sample gas; a second detector that detects light passing through the second sample cell to detect a light intensity thereof in the absorption wavelength range of the second component; and a third detector that detects light passing through the second sample cell to detect a light intensity thereof in the absorption wavelength range of the third component. The second sample cell, the second detector and the third detector are disposed in series on a second optical path of light emitted from the second light source.

According to the gas measurement device described in the first aspect, since the detector that detects the first component is disposed on the first optical path which is different from the second optical path on which the detector that detects a component that interferes with the detection of the first component is disposed, it is possible to suppress attenuation of light and suppress a decrease in the detection sensitivity of the first component. In addition, since the second detector and the third detector are disposed in series on the second optical path, it is possible to suppress an increase in the overall size of the gas measurement device.

(Second Aspect) In the gas measurement device according to the first aspect, the sample gas is exhaust gas. The first component is dinitrogen monoxide.

According to the gas measurement device described in the second aspect, dinitrogen monoxide, which is the greenhouse gas, can be measured using exhaust gas as a sample gas.

(Third Aspect) In the gas measurement device according to the second aspect, the first detector includes a first housing filled with the first component and a first detection unit that detects a pressure in the first housing. The first detection unit further includes: an optical filter that transmits light in a first absorption wavelength range of dinitrogen monoxide but does not transmit light in a second absorption wavelength range of dinitrogen monoxide overlapping with an absorption wavelength range of carbon dioxide; and a first gas filter filled with a gas component having an absorption wavelength range at least partially overlapping with the first absorption wavelength range. The optical filter and the first gas filter are disposed on the first optical path between the first sample cell and the first detector.

According to the gas measurement device described in the third aspect, it is possible to reduce the influence of carbon dioxide present in the exhaust gas at a high concentration on the measurement of dinitrogen monoxide, and to reduce the influence of the gas component which has an absorption wavelength range at least partially overlapping with the first absorption wavelength range on the measurement of dinitrogen monoxide.

(Fourth Aspect) In the gas measurement device according to the third aspect, the gas component filled in the first gas filter is methane.

According to the gas measurement device described in the fourth aspect, it is possible to reduce the influence of methane present in the exhaust gas on the measurement of dinitrogen monoxide.

(Fifth Aspect) In the gas measurement device according to any one of the first to fourth aspects, the second detection unit further includes a second gas filter that is filled with carbon dioxide and is disposed on the second optical path between the second sample cell and the second detector.

According to the gas measurement device described in the fifth aspect, it is possible to reduce the influence of carbon dioxide present in the exhaust gas at a high concentration on the measurement of the second component and the third component.

(Sixth Aspect) In the gas measurement device according to any one of the second to fifth aspects, the second component is sulfur dioxide. The third component is methane. The second detector includes a second housing filled with the second component and a second detector that detects a pressure in the second housing. The third detector detects light passing through the second sample cell and the second housing in this order.

According to the gas measurement device described in the sixth aspect, the second detector may function as a gas filter to reduce the influence of sulfur dioxide on the measurement of methane.

(Seventh Aspect) In the gas measurement device according to any one of the second to fifth aspects, the second detection unit further includes a fourth detector that detects light passing through the second sample cell to detect a light intensity thereof in an absorption wavelength range of a fourth component, the fourth component having an absorption wavelength range at least partially overlapping with an absorption wavelength range of the first component. The second component is sulfur dioxide. The third component is methane. The fourth component is carbon dioxide. The second sample cell, the second detector, the third detector, and the fourth detector are disposed in series on the second optical path in this order.

According to the gas measurement device described in the seventh aspect, it is possible to determine the detection values of a plurality of interference components that interfere the measurement of dinitrogen monoxide, which makes it possible to measure the concentration of dinitrogen monoxide more accurately.

(Eighth Aspect) A gas measurement device according to an aspect of the present invention measures a sample gas that contains a plurality of gas components whose absorption wavelength ranges at least partially overlap with each other. The gas measurement device includes: a detection unit that detects light passing through the sample gas to detect a light intensity thereof in the absorption wavelength range of each of the plurality of gas components; and an arithmetic unit that determines a concentration of a target component among the plurality of gas components based on a detection value of each of the plurality of gas components detected by the detection unit. A gas component which has an absorption wavelength range at least partially overlapping with an absorption wavelength range of one gas component of a plurality of gas components is an interference component that interferes with the one gas component. The concentration of each of the plurality of gas components is expressed as a corrected concentration which is obtained by subtracting a measurement error caused by one or more interference components that interfere with the gas component on the measurement of the gas component from an uncorrected concentration that corresponds to the detection value of the gas component. The measurement error on the measurement of the gas component is represented as a linear sum of the corrected concentration of the interference component that interferes with the gas component and the influence coefficient indicating the degree of influence of the interference component on the measurement of the gas component. The arithmetic unit determines a corrected concentration of the target component as the concentration of the target component based on the plurality of influence coefficients and the detection values of the plurality of gas components in accordance with the relationship between the corrected concentration and the uncorrected concentration of each of the plurality of gas components.

According to the gas measurement device described in the eighth aspect, the corrected concentration of the target component is expressed as the corrected concentration obtained by subtracting the measurement error on the measurement of the interference component from the uncorrected concentration of the interference component that interferes with the target component. The concentration of the target component is determined according to the relationship between the corrected concentration of the target component and the corrected concentration of the interference component. Therefore, the concentration of the target component can be more accurately determined by taking into consideration the influence of other components on the measurement of the interference component.

(Ninth Aspect) In the gas measurement device described in the eighth aspect, the detection unit detects light passing through a reference gas which is composed of a first component of the plurality of gas components and has a known concentration to detect the light intensity thereof in the absorption wavelength range of a second component of the plurality of gas components. The arithmetic unit determines an influence coefficient indicating the degree of influence of the first component on the measurement of the second component based on the detection value of the second component and the known concentration of the first component in accordance with the relationship between the corrected concentration of the second component and the uncorrected concentration thereof.

According to the gas measurement device described in the ninth aspect, the influence coefficient can be determined based on the actual measurement value in consideration of the individual difference of the detectors or the like.

(Tenth Aspect) **In** the gas measurement device according to the eighth or ninth aspect, the corrected concentration of the target component is represented by a linear sum of an intermediate coefficient represented by a plurality of influence coefficients and an uncorrected concentration corresponding to a detection value of each of the plurality of gas components based on a plurality of relational expressions indicating the relationship between the corrected concentration and the uncorrected concentration for each of the plurality of gas components. The arithmetic unit determines the corrected concentration of the target component as the concentration of the target component based on the intermediate coefficient and the detection value of each of the plurality of gas components.

According to the gas measurement device described in the tenth aspect, it is possible to easily determine the concentration of the target component, which makes it possible to reduce the load on the arithmetic unit.

(Eleventh Aspect) In the gas measurement device according to any one of the eighth to tenth aspects, the plurality of gas components include dinitrogen monoxide and at least one of carbon dioxide, methane, and sulfur dioxide.

According to the gas measurement device described in the eleventh aspect, dinitrogen monoxide, which is a greenhouse gas, can be measured with high accuracy using exhaust gas as a sample gas.

(Twelfth Aspect) In the gas measurement device according to any one of the eighth to eleventh aspects, when the measurement error caused by an interference component of one or more interference components that interfere with one gas component on the measurement of the one gas component is 1/100 or less of the concentration of the one gas component, the arithmetic unit sets the influence of the interference component on the measurement of the one gas component to zero.

According to the gas measurement device described in the twelfth aspect, it is possible to easily determine the concentration of the target component, which makes it possible to reduce the load on the arithmetic unit.

(Thirteenth Aspect) In the gas measurement device according to any one of the eighth to eleventh aspects, the gas component different from the target component in the plurality of gas components includes carbon dioxide. The arithmetic unit determines the concentration of the target component on the assumption that other components has no influence on the measurement of carbon dioxide.

According to the gas measurement device described in the thirteenth aspect, in the case of measuring a sample gas containing carbon dioxide at a high concentration, such as exhaust gas, it is possible to easily determine the concentration of the target component, which makes it possible to reduce the load on the arithmetic unit.

(Fourteenth Aspect) A method according to an aspect is a method of determining a concentration of a target component in a sample gas that contains a plurality of gas components whose absorption wavelength ranges at least partially overlap with each other. The method includes a step of acquiring a detection value of each of a plurality of gas components which is obtained by detecting light passing through the sample gas to detect a light intensity thereof in the absorption wavelength range of each of the plurality of gas components, and a step of determining a concentration of a target component in the plurality of gas components based on the obtained detection value of each of the plurality of gas components. The gas component having an absorption wavelength range at least partially overlapping with an absorption wavelength range of one gas component in the plurality of gas components is an interference component that interferes with the one gas component. The concentration of each of the plurality of gas components is represented by a corrected concentration obtained by subtracting a measurement error caused by one or more interference components that interfere with the gas component on the measurement of the gas component from an uncorrected concentration corresponding to the detection value of the gas component. The measurement error caused by the interference component on the measurement of the gas component is represented by a linear sum of the corrected concentration of the interference component that interferes with the gas component and the influence coefficient indicating the degree of influence of the interference component on the measurement of the gas component. In the step of determining the concentration of the target component, the concentration of the target component is determined as the corrected concentration of the target component based on the plurality of influence coefficients and the detection value of each of the plurality of gas components in accordance with the relationship between the corrected concentration and the uncorrected concentration of each of the plurality of gas components.

According to the method described in the fourteenth aspect, the corrected concentration of the target component is represented by using the corrected concentration obtained by subtracting the measurement error on the measurement of the interference component from the uncorrected concentration of the interference component that interferes with the target component. The concentration of the target component is determined according to the relationship between the corrected concentration of the target component and the corrected concentration of the interference component. Therefore, the concentration of the target component can be more accurately determined in consideration of the influence of other components on the measurement of the interference component.

(Fifteenth Aspect) The method according to the fourteenth aspect further includes a step of determining an influence coefficient indicating the degree of influence of the interference component that interferes with the one gas component on the measurement of the one gas component. The step of determining the influence coefficient includes a step of acquiring a detection value obtained by detecting light passing through the reference gas which is composed of a first component in the plurality of gas components and has a known concentration to detect the light intensity thereof in the absorption wavelength range of a second component of the plurality of gas components, and a step of determining the influence coefficient indicating the degree of influence of the first component on the measurement of the second component based on the detection value of the second component and the known concentration of the first component in accordance with the relationship between the corrected concentration of the second component and the uncorrected concentration thereof.

According to the method described in the fifteenth aspect, the influence coefficient can be determined based on the actual measurement value in consideration of the individual difference of the detectors or the like.

It is contemplated that the embodiments disclosed herein may be appropriately combined and implemented without contradiction. It should be understood that the embodiments disclosed herein are illustrative and non-restrictive in all respects. The scope of the present invention is defined by the terms of the claims rather than the description of the embodiments above, and is intended to include any modifications within the scope and meaning equivalent to the terms of the claims.

REFERENCE SIGNS LIST

1: gas measurement device; 10A: first detector; 10B: second detector; 10C: third detector; 10D: fourth detector; 12A-12D: first housing to fourth housing; 14A-14D: first detection unit to fourth detection unit; 20: optical filter; 30: first gas filter; 40: second gas filter; 100: detection unit; 112, 114: switching valve; 120: first detection unit; 122: first sample cell; 122a, 142a: gas inlet; 122b, 142b: gas outlet; 124: first light source; 140: second detection unit; 142: second sample cell; 144: second light source; 160: motor; 180: sector; 200: control unit; 220: processor; 222: uncorrected concentration calculation unit; 224: correction value calculation unit; 226: coefficient calculation unit; 228: storage unit; 240: memory; 300: input unit; 400: display unit; IR1: first optical path; IR2: second optical path; L1-L4: first line to fourth line; RG: reference gas; RL: reference gas line; SG: measurement gas; SL: measurement gas line.

**Claims**

1. A gas measurement device that measures a sample gas including a plurality of gas components, absorption wavelength ranges of the plurality of gas components at least partially overlapping with each other, the gas measurement device comprising:

   a first detection unit that detects a first component in the sample gas;
   a second detection unit that detects a second component and a third component in the sample gas, each of the second and third components having an absorption wavelength range at least partially overlapping with an absorption wavelength range of the first component; and
   an arithmetic unit that determines a concentration of the first component by correcting a detection value of the first component detected by the first detection unit using a plurality of detection values detected by the second detection unit,
   the first detection unit including:

      a first light source;
      a first sample cell filled with the sample gas; and
      a first detector that detects light passing through the first sample cell to detect a light intensity thereof in the absorption wavelength range of the first component,

   the first sample cell and the first detector being disposed in series on a first optical path of light emitted from the first light source,
   the second detection unit including:

      a second light source;
      a second sample cell filled with the sample gas;
      a second detector that detects light passing through the second sample cell to detect a light intensity thereof in the absorption wavelength range of the second component; and
      a third detector that detects light passing through the second sample cell to detect a light intensity thereof in the absorption wavelength range of the third component,

   the second sample cell, the second detector and the third detector being disposed in series on a second optical path of light emitted from the second light source.

2. The gas measurement device according to claim 1, wherein

   the sample gas is exhaust gas, and
   the first component is dinitrogen oxide.

3. The gas measurement device according to claim 2, wherein

   the first detector includes:

      a first housing filled with the first component; and
      a first detection unit that detects a pressure in the first housing,

the first detection unit includes:

an optical filter that transmits light in a first absorption wavelength range of dinitrogen monoxide but does not transmit light in a second absorption wavelength range of dinitrogen monoxide overlapping with an absorption wavelength range of carbon dioxide; and
a first gas filter filled with a gas component having an absorption wavelength range at least partially overlapping with the first absorption wavelength range,

the optical filter and the first gas filter are disposed on the first optical path between the first sample cell and the first detector.

4. The gas measurement device according to claim 3, wherein
the gas component filled in the first gas filter is methane.

5. The gas measurement device according to any one of claims 2 to 4, wherein
the second detection unit further includes a second gas filter that is filled with carbon dioxide and is disposed on the second optical path between the second sample cell and the second detector.

6. The gas measurement device according to any one of claims 2 to 4, wherein

the second component is sulfur dioxide,
the third component is methane,
the second detector includes:

a second housing filled with the second component; and
a second detection unit that detects a pressure in the second housing,

the third detector detects light passing through the second sample cell and the second housing in this order.

7. The gas measurement device according to any one of claims 2 to 4, wherein

the second detection unit further includes a fourth detector that detects light passing through the second sample cell to detect a light intensity thereof in an absorption wavelength range of a fourth component, the fourth component having an absorption wavelength range at least partially overlapping with an absorption wavelength range of the first component,
the second component is sulfur dioxide,
the third component is methane,
the fourth component is carbon dioxide, and
the second sample cell, the second detector, the third detector and the fourth detector are disposed in series on the second optical path in this order.

FIG.1

FIG.2

INPUT UNIT — 300

CONCENTRATION

DETECTION UNIT — 100

DETECTION VALUE (REFERENCE GAS)

DETECTION VALUE (SAMPLE GAS)

— 200

UNCORRECTED CONCENTRATION CALCULATION UNIT — 222

UNCORRECTED CONCENTRATION

UNCORRECTED CONCENTRATION

COEFFICIENT CALCULATION UNIT — 226

INFLUENCE COEFFICIENT

CORRECTION VALUE CALCULATION UNIT — 224

INFLUENCE COEFFICIENT

STORAGE UNIT — 228

[N₂O]

DISPLAY UNIT — 400

EP 4 571 294 A1

FIG.3

```
                    ┌─────────┐
                    │  START  │
                    └────┬────┘
                         │            ┌─ S12
      ┌──────────────────▼─────────────────────┐
      │ ACQUIRE DETECTION VALUE OF LIGHT        │
      │ INTENSITY IN ABSORPTION                 │
      │ WAVELENGTH RANGE OF EACH OF THE         │
      │ PLURALITY OF GAS COMPONENTS             │
      └──────────────────┬─────────────────────┘
                         │            ┌─ S14
      ┌──────────────────▼─────────────────────┐
      │ DETERMINE CONCENTRATION OF              │
      │ DINITROGEN MONOXIDE BASED ON            │
      │ DETECTION VALUE                         │
      └──────────────────┬─────────────────────┘
                         │            ┌─ S16
      ┌──────────────────▼─────────────────────┐
      │ DISPLAY CONCENTRATION OF                │
      │ DINITROGEN MONOXIDE                     │
      └──────────────────┬─────────────────────┘
                         │
                    ┌────▼────┐
                    │   END   │
                    └─────────┘
```

FIG.4

```
              ┌─────────┐
              │  START  │
              └─────────┘
                   │
                   ▼              ⌐S22
    ┌──────────────────────────────┐
    │ ACQUIRE DETECTION            │
    │ VALUE OF REFERENCE           │
    │ GAS DINITROGEN OXIDE         │
    └──────────────────────────────┘
                   │
                   ▼              ⌐S24
    ┌──────────────────────────────┐
    │ RECEIVE INPUT OF             │
    │ CONCENTRATION OF             │
    │ DINITROGEN MONOXIDE          │
    └──────────────────────────────┘
                   │
                   ▼              ⌐S26
    ┌──────────────────────────────┐
    │ DETERMINE INFLUENCE          │
    │ COEFFICIENTS "a" AND         │
    │ "f" INDICATING DEGREE        │
    │ OF INFLUENCE OF              │
    │ DINITROGEN MONOXIDE          │
    │ ON MEASUREMENT OF            │
    │ OTHER COMPONENTS             │
    └──────────────────────────────┘
                   │
                   ▼              ⌐S28
    ┌──────────────────────────────┐
    │ ACQUIRE DETECTION            │
    │ VALUE OF REFERENCE           │
    │ GAS SULFUR DIOXIDE           │
    └──────────────────────────────┘
                   │
                   ▼              ⌐S30
    ┌──────────────────────────────┐
    │ RECEIVE INPUT OF             │
    │ CONCENTRATION OF             │
    │ SULFUR DIOXIDE               │
    └──────────────────────────────┘
                   │
                   ▼              ⌐S32
    ┌──────────────────────────────┐
    │ DETERMINE INFLUENCE          │
    │ COEFFICIENTS "b" AND         │
    │ "d" INDICATING DEGREE        │
    │ OF INFLUENCE OF SULFUR       │
    │ DIOXIDE ON MEASUREMENT       │
    │ OF OTHER COMPONENTS          │
    └──────────────────────────────┘


                   ▼              ⌐S34
    ┌──────────────────────────────┐
    │ ACQUIRE DETECTION            │
    │ VALUE OF REFERENCE           │
    │ GAS METHANE                  │
    └──────────────────────────────┘
                   │
                   ▼              ⌐S36
    ┌──────────────────────────────┐
    │ RECEIVE INPUT OF             │
    │ CONCENTRATION OF             │
    │ METHANE                      │
    └──────────────────────────────┘
                   │
                   ▼              ⌐S38
    ┌──────────────────────────────┐
    │ DETERMINE INFLUENCE          │
    │ COEFFICIENTS "c" AND "e"     │
    │ INDICATING DEGREE OF         │
    │ INFLUENCE OF METHANE         │
    │ ON MEASUREMENT OF            │
    │ OTHER COMPONENTS             │
    └──────────────────────────────┘
                   │
                   ▼              ⌐S40
    ┌──────────────────────────────┐
    │ ACQUIRE DETECTION            │
    │ VALUE OF REFERENCE           │
    │ GAS CARBON DIOXIDE           │
    └──────────────────────────────┘
                   │
                   ▼              ⌐S42
    ┌──────────────────────────────┐
    │ RECEIVE INPUT OF             │
    │ CONCENTRATION OF             │
    │ CARBON DIOXIDE               │
    └──────────────────────────────┘
                   │
                   ▼              ⌐S44
    ┌──────────────────────────────┐
    │ DETERMINE INFLUENCE          │
    │ COEFFICIENTS "g", "h"        │
    │ AND "i" INDICATING           │
    │ DEGREE OF INFLUENCE OF       │
    │ CARBON DIOXIDE ON            │
    │ MEASUREMENT OF OTHER         │
    │ COMPONENTS                   │
    └──────────────────────────────┘
                   │
                   ▼
              ┌─────────┐
              │   END   │
              └─────────┘
```

21

FIG.5

FIG.6

## INTERNATIONAL SEARCH REPORT

| International application No. |
|---|
| **PCT/JP2023/028260** |

| A. | CLASSIFICATION OF SUBJECT MATTER |
|---|---|

*G01N 21/3504*(2014.01)i
FI:  G01N21/3504

According to International Patent Classification (IPC) or to both national classification and IPC

| B. | FIELDS SEARCHED |
|---|---|

Minimum documentation searched (classification system followed by classification symbols)

    G01N21/3504

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2013-120058 A (SHIMADZU CORP) 17 June 2013 (2013-06-17)<br>    fig. 1, paragraphs [0015]-[0031] | 1-7 |
| A | JP 7-167784 A (FUJI ELECTRIC CO LTD) 04 July 1995 (1995-07-04)<br>    fig. 1-2, 6, paragraphs [0002]-[0025] | 1-7 |
| A | JP 2003-50203 A (NISSAN MOTOR CO LTD) 21 February 2003 (2003-02-21)<br>    fig. 1, 9, paragraphs [0020]-[0055] | 1-7 |
| A | JP 51-24282 A (SHIMADZU CORP) 27 February 1976 (1976-02-27)<br>    figures, pp. 2-3 | 1-7 |
| A | JP 51-45570 A (SHIMADZU CORP) 19 April 1976 (1976-04-19)<br>    fig. 2, pp. 2-3 | 1-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/028260**

| Patent document cited in search report | | | Publication date (day/month/year) | Patent family member(s) | | | Publication date (day/month/year) |
|---|---|---|---|---|---|---|---|
| JP | 2013-120058 | A | 17 June 2013 | CN | 103149171 | A | |
| JP | 7-167784 | A | 04 July 1995 | (Family: none) | | | |
| JP | 2003-50203 | A | 21 February 2003 | (Family: none) | | | |
| JP | 51-24282 | A | 27 February 1976 | (Family: none) | | | |
| JP | 51-45570 | A | 19 April 1976 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3170848 A
- JP H9318534 A
- JP 61199657 U